# EUROPEAN PATENT SPECIFICATION

(11) **EP 0 866 005 B1**
(45) Date of publication and mention of the grant of the patent: **02.06.2004**
(21) Application number: 98301646.0
(22) Date of filing: 05.03.1998
(51) Int. Cl.: B65G 53/46, B65G 51/02

(54) **Article handling apparatus**
Vorrichtung zum Handhaben von Gegenständen
Dispositif de manipulation d'articles

(30) Priority: 19.03.1997 EP 97301861
(43) Date of publication of application: 23.09.1998
(73) Proprietor: UNILEVER PLC, London EC4P 4BQ (GB); UNILEVER N.V., 3013 AL Rotterdam (NL)
(72) Inventor: Cahill, Michael John, Coventry, CV4 8HS (GB); Martin, Simon Charles, Coventry, CV4 8HS (GB); Stembridge, James Robert, Coventry, CV4 8HS (GB)
(74) Representative: Hugot, Alain (FR)

(56) References cited:
- DE-B- 1 294 883
- US-A- 5 156 499

## Description

This invention relates to the handling of a series of individual articles, eg. to control the movement of the articles or to collect batches of the articles.

In one of its aspects, the invention is concerned with the batching of articles that are being manufactured at high production rates. In particular if the articles are relatively fragile it can be difficult to collect them in batches of predetermined quantities as they emerge from the production process, eg. for weighing and/or packaging.

According to this aspect of the invention, apparatus is provided for releasing articles in batches comprising a conduit having an exit provided with a closure gate rotatable to open and close the conduit, characterised in that said gate comprises at least one closure member mounted on a rotary axis at or adjacent a side wall of the conduit to be rotatable about said axis generally in the direction of movement of the articles through the conduit to a position extending across the conduit to close the exit for the articles, and is further rotatable in the same direction from said closing position to open the exit.

Preferably there is a pair of closure members arranged side by side at the exit passage and rotatable in opposite directions to each other for said opening and closing of the exit.

The closure member or members can thus be employed to temporarily cut off the flow of articles when a predetermined batch has been counted through. By using one or more rotatable members as a gate to stop the flow of articles from the conduit it is possible to handle a continuous stream of articles and to batch predetermined quantities of articles from that stream. As soon as the required number of articles has been dispensed, the conduit exit can be closed by the gate while the batch of articles is transferred away or is weighed or subjected to other tests, the continuing stream of articles arriving meanwhile being accumulated at the gate. It is only necessary to ensure that each batch has moved on further in time to accommodate the following batch.

By rotating the or each closure member so that as the gate opens it moves in generally the same direction as the travel direction of the articles, the accumulated articles can be cleared from the gate rapidly as it is opened. Also, if the or each member moves in the same direction to close the gate its motion can be more easily timed to synchronise with brief intervals between the arrival of successive articles, in order to avoid the risk of trapping articles during the closure of the gate.

The invention will be described by way of example with reference to the accompanying diagrammatic drawings, in which:
Fig. 1 is a schematic side view of one form of apparatus according to the invention,
Fig. 2 is an oblique view of the apparatus of Fig. 1 with the entry tube detached,
Fig. 4 is a side view of the wrap spring clutch employed in the apparatus,
Figs. 5 and 6 are detail front and side views of a comb plate and an adjacent section of the exit chamber wall at the bottom of the conduit, and
Figs. 7 is a schematic side view of a modified form of apparatus according to the invention.

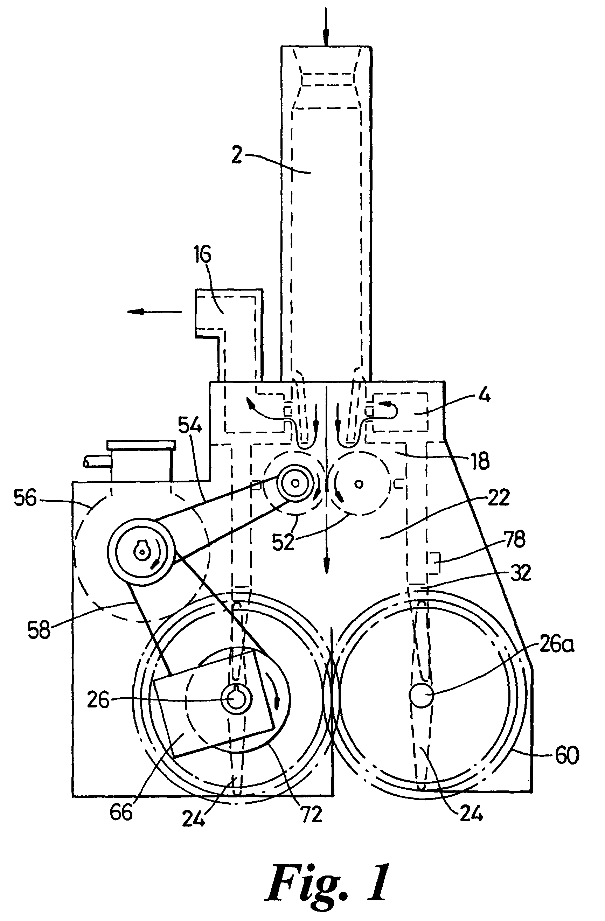

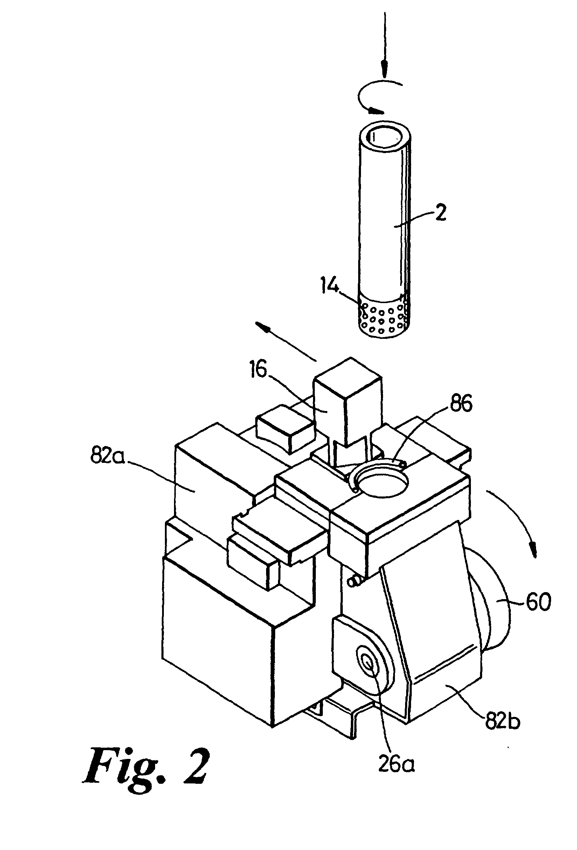

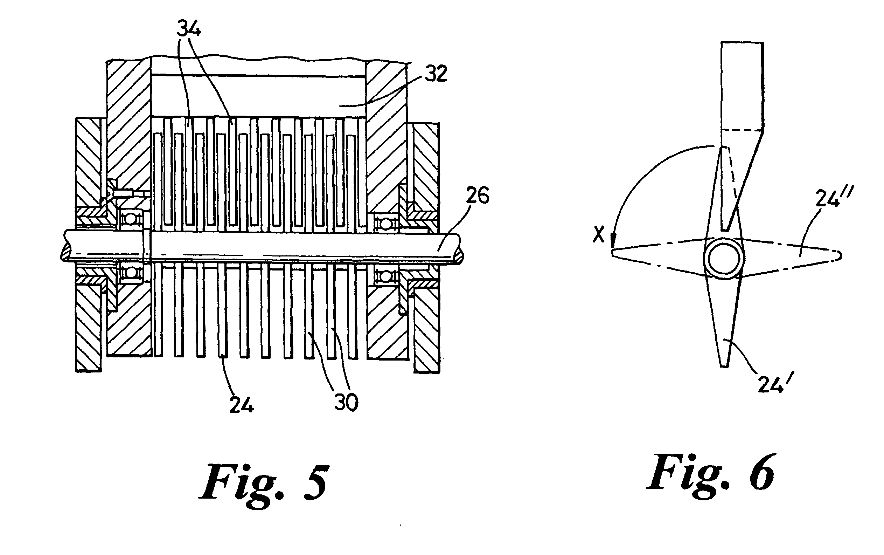

The apparatus illustrated in Figs. 1 and 2 of the drawings is intended to be positioned between a vertical flow-fill apparatus (not shown) which delivers a stream of articles into the top entry of a tube 2 forming the entry duct of a vertical conduit through the apparatus, and a conveyor (not shown) which lies below the bottom of the conduit. The flow-fill apparatus and the conveyor can each be of conventional design and do not need to be described further. They may be replaced by other apparatus and devices if desired, for example a weighing hopper can be placed below the conduit exit.

The tube 2 leads downwards through a suction chamber 4 which forms an annulus around a lower region of the tube.

At the bottom outlet from the exit chamber 22, a pair of opposed comb plates 24 are rotatable on parallel shafts 26,26a to form a closure gate. From the central shaft of each comb plate corresponding sets of parallel teeth 30 project in diametrically opposite directions. The comb plates 24 are shown in a vertical position in Fig. 1, in which they leave the outlet of the exit chamber open. In Fig. 6 the comb plate is shown in full lines in this position, indicated by the reference 24', and is shown in phantom lines and indicated by the reference 24" in a position in which it forms a barrier across the outlet. Side walls 32 of the exit chamber extending upwards from close to the comb plate shafts 28 are slotted to form a series of fins 34 (Fig. 5) which allow free passage for the comb plates as these are rotated on their mountings through the vertical position.

The rollers are driven by a belt drive 54 from a constant speed motor 56. A further belt drive 58 from the motor 56 drives the gate comb plates 24 which are similarly coupled together by toothed gears 60 to rotate synchronously in opposite directions. The comb plates move in 90° steps between the vertical and horizontal positions shown in Figs. 6, for which purpose they are driven through a "CB6 Super" wrap spring clutch 66 manufactured by Warner Electric Rotary Motion Division of Pitman, New Jersey.

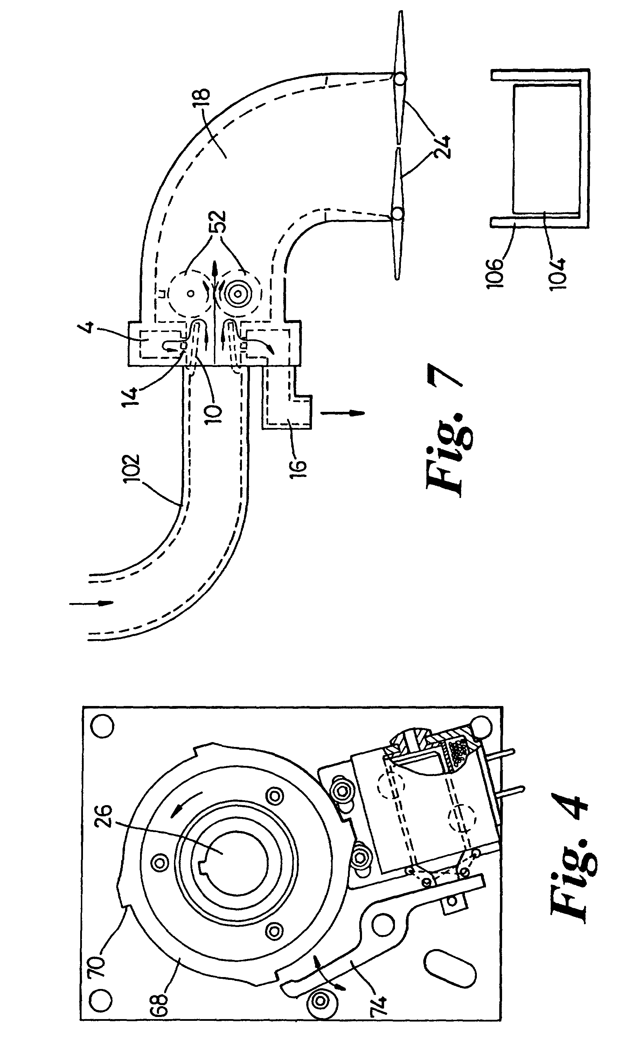

The clutch 66 comprises a stop collar 68, (Fig. 4) having four equally spaced stop faces 70 for movement in 90° steps in known manner. Thus, the gate belt drive 58 applies a continuous rotation to a pulley 72 rotatably mounted on the shaft 26 of the rear comb plate 24. A solenoid-operated pawl 74 (Fig. 4) is engageable with the stop collar 68 of the clutch to hold it fixed, during which time the drive is not transmitted from the pulley 72 and both comb plates 24 are held braked. when the pawl 74 releases the stop collar 68 the brake imposed by the clutch 66 is released and the pulley drive is engaged with the shaft 26 of the rear comb plate to rotate the shaft and the stop collar 76 as one. Both comb plates of course rotate together in opposite directions and when a 90' rotation has been completed, the pawl 74 arrests the stop collar 68. The clutch then instantaneously brakes the comb plates and decouples them from the drive pulley 72.

Thus, with the comb plates 16 at the gate-open setting illustrated in Fig. 1 and 2, a first operation of the clutch will rotate the comb plates through 90° in the directions indicated by the arrows X in Figs. 1 and 6 to close the gate. The next operation of the clutch will reopen the gate as the comb plates are rotated in the same direction through a further 90°, so that the comb plates in the path of the articles always move generally in the direction of movement of the articles. These steps are repeated in further operations of the clutch to alternately open and close the gate at the conduit exit.

In a preferred mode of operation of the apparatus, the comb plates 24 are normally held in their vertical positions, leaving open the outlet from the exit chamber 22 while a required number of articles are counted through the apparatus by conventional counter means (not shown), or by a timer if appropriate, and into whatever receiver (not shown) is provided for them below the conduit. At the end of the required count the comb plates are rotated to the horizontal position, so holding back further articles, while the batch of articles counted out is transferred away, and possibly weighed. Once the receiver has been cleared, eg. the receiving conveyor has moved on or the weighing hopper has been emptied, the comb plates rotate to open the gate again to release the first articles of the next batch which will have accumulated in the conduit in the meanwhile, and the gate is then kept open until the remainder of that batch have passed through.

In this manner fixed quantities of articles are delivered in batches, the size of the batch being adjustable by adjusting the period for which the gate is held open. In particular applications in which the weight of the batches of articles need not be checked, it is of course possible to dispense with the weighing hopper.

It has already been noted that the comb plates 24 move through the exit chamber in the general direction of movement of the articles, and the peripheral speed of the comb plates is preferably approximately equal to the speed of descent of the articles past them. By moving at a similar speed to the articles it can be ensured that the comb plates will not block the discharge of collected articles when the gate is opened and that they impose a precise cut off on the flow of articles from the apparatus when the gate is closed.

As a control measure, a sensor 78 (Fig. 1) is able to detect that the closure gate is in an open state. If the gate mechanism should malfunction, it is thereby possible to automatically stop the flow of articles into the apparatus by employing the sensor output to actuate means (not shown) for stopping the production of further articles or for diverting the flow of articles elsewhere.

While it is possible to employ other forms of intermittent drive to rotate the comb plates, the drive arrangement employing the wrap spring clutch 66 with a continuous input drive allows the gate to be opened and closed extremely rapidly without risk of trapping articles between the comb plates, in particular when the flow is being stopped. The acceleration given to the articles by the suction acting in the tube 2 increases the separation of the articles and so makes it easier to close the gate in the interval between succeeding articles. Consequently, the apparatus can be employed with high rates of article throughflow, for example of the order of 900 articles per minute, delivering batches of ten articles at a time, without making it necessary to interrupt the passage of articles into the apparatus to count through each batch of articles accurately.

Fig. 7 illustrates a modified form of apparatus according to the invention in which parts which have already been described are indicated by the same reference numbers. The drawing indicates that the orientation of the path through the suction chamber can be varied if desired, and that it is possible to employ a longer suction tube 102 if it is required to deliver the batches of articles to a receiving location remote from the article-producing apparatus, such as to a container 104 on a conveyor 106. The drive arrangement for the comb plates 24 may be as already described.

## Claims

1. Apparatus for releasing articles in batches comprising a conduit (2) having an exit (22) provided with a closure gate rotatable to open and close the conduit, **characterised in that** said gate comprises at least one closure member (24) mounted on a rotary axis (26, 26a) at or adjacent a side wall (32) of the conduit to be rotatable about said axis generally in the direction of movement of the articles through the conduit to a position extending across the conduit to close the exit for the articles, and is further rotatable in the same direction from said closing position to open the exit, wherein said at least one closure member comprises a series of elements (24) spaced along the rotary axis (26, 26a) and extending outwardly therefrom, and an adjacent wall (32) of the conduit leading to the closure gate comprises a series of spaced elements (34) for interleaving with said elements of said closure member when the member is rotated.

2. Apparatus according to claim 1 wherein said at least one closure member is a substantially planar member.

3. Apparatus according to claim 1 or claim 2 wherein said at least one closure member is rotatable from a position substantially coplanar with an adjacent region of the conduit wall to said closing position.

4. Apparatus according to any one of claims 1 to 3 wherein said at least one closure member comprises diametrically opposite elements (24) symmetrically disposed with respect to the rotary axis (26, 26a), whereby the member is rotatable between opening and closing positions in equal 90° steps.

5. Apparatus according to any one of the preceding claims comprising a pair of said rotary closure members (24) mounted on rotary axes (26, 26a) at or adjacent opposite side walls (32) of the conduit, and means (56, 58) for rotating the members together in opposite directions to open and close the exit jointly.

6. Apparatus according to any one of the preceding claims wherein the conduit provides a downwardly directed path for the articles released by the opening of the closure gate.

7. Apparatus according to any one of the preceding claims comprising suction means (4, 16) in an article path leading to said conduit, and counter-rotating rollers (52) at least partially sealing said path upstream of the closure gate, at least one of the rollers having a yieldable periphery to permit articles to pass between the rollers by deforming said periphery or peripheries.

## Patentansprüche

1. Vorrichtung zum Freigeben von Gegenständen in Chargen, mit einer Leitung (2) mit einem Ausgang (22), der mit einer zum Öffnen und Schließen der Leitung drehbaren Verschlussschranke versehen ist, **dadurch gekennzeichnet, dass** die Schranke mindestens ein Verschlusselement (24) aufweist, das auf einer drehbaren Achse (26, 26a) an oder benachbart einer Seitenwand (32) der Leitung so befestigt ist, dass es um diese Achse im Allgemeinen in der Bewegungsrichtung der Gegenstände durch die Leitung in eine Position drehbar ist, die sich quer zur Leitung zum Schließen des Ausgangs für die Gegenstände erstreckt, und in derselben Richtung aus der Schließposition zum Öffnen des Ausgangs weiter drehbar ist, wobei das mindestens eine Verschlusselement eine Reihe von Elementen (24) umfasst, die in Abständen entlang der Drehachse (26, 26a) vorliegen und von dieser nach außen ragen, und eine benachbarte Wand (32) der Leitung, die zur Verschlussschranke führt, eine Reihe von im Abstand voneinander befindlichen Elementen (34) aufweist, die mit den Elementen des Verschlusselements kämmen, wenn dieses gedreht wird.

2. Vorrichtung nach Anspruch 1, wobei das mindestens eine Verschlusselement ein im Wesentlichen planes Element ist.

3. Vorrichtung nach Anspruch 1 oder 2, wobei das mindestens eine Verschlusselement aus einer Position, die im Wesentlichen koplanar mit einem angrenzenden Bereich der Leitungswand ist, in die Schließposition drehbar ist.

4. Vorrichtung nach einem der Ansprüche 1 bis 3, wobei das mindestens eine Verschlusselement diametral gegenüberliegende Elemente (24) aufweist, die symmetrisch in Bezug auf die Drehachse (26, 26a) angeordnet sind, wobei das Verschlusselement zwischen Öffnungs- und Schließpositionen in gleichen 90°-Schritten drehbar ist.

5. Vorrichtung nach einem der vorhergehenden Ansprüche, welche ein Paar von drehbaren Verschlusselementen (24), die auf Drehachsen (26, 26a) an oder benachbart gegenüberliegen Seitenwänden der Leitung befestigt sind, und Mittel (56, 58) zum gemeinsamen Drehen der Verschlusselemente in entgegengesetzte Richtungen zum gemeinsamen Öffnen und Schließen des Ausgangs umfasst.

6. Vorrichtung nach einem der vorhergehenden Ansprüche, wobei die Leitung einen abwärts gerichteten Weg für die durch das Öffnen der Verschlussschranke freigegebenen Gegenstände vorsieht.

7. Vorrichtung nach einem der vorhergehenden Ansprüche, welche Saugmittel (4, 16) in einem zur Leitung führenden Weg für die Gegenstände, und sich in Gegenrichtung drehende Rollen (52) aufweist, die diesen Weg vor der Verschlussschranke zumindest teilweise verschließen, und wobei mindestens eine der Rollen einen nachgiebigen Umfang hat, um ein Passieren von Gegenständen zwischen den Rollen durch Verformen des Umfangs oder der Umfänge zu ermöglichen.

## Revendications

1. Dispositif pour libérer des articles dans des lots, comprenant un conduit (2) possédant une sortie (22) pourvue d'une porte de fermeture pouvant tourner pour ouvrir et fermer le conduit, **caractérisé en ce que** ladite porte comprend au moins un élément de fermeture (24) monté sur un axe de rotation (26, 26a) sur ou au voisinage d'une paroi latérale (32) du conduit de manière à pouvoir tourner autour dudit axe d'une manière générale dans la direction de déplacement des articles à travers le conduit jusque dans une position qui s'étend en travers du conduit de manière à fermer la sortie pour les articles, et en outre peut tourner dans la même direction à partir de ladite position de fermeture pour ouvrir la sortie, et dans lequel ledit au moins un élément de fermeture comprend une série d'éléments (24) espacés le long de l'axe de rotation (26, 26a) et s'étendant vers l'extérieur à partir de cet axe, et une paroi adjacente (32) du conduit aboutissant à la porte de fermeture comprend une série d'éléments espacés (34) pour une imbrication avec lesdits éléments dudit élément de fermeture lorsque l'élément a pivoté.

2. Dispositif selon la revendication 1, dans lequel ledit au moins un élément de fermeture est un élément essentiellement plat.

3. Dispositif selon la revendication 1 ou la revendication 2, dans lequel ledit au moins un élément de fermeture peut tourner à partir d'une position essentiellement coplanaire avec une région adjacente de la paroi du conduit, jusque dans ladite position de fermeture.

4. Dispositif selon l'une quelconque des revendications 1 à 3, dans lequel ledit au moins un élément de fermeture comprend des éléments diamétralement opposés (24) disposés symétriquement par rapport à l'axe de rotation (26, 26a), ce qui a pour effet que l'élément peut tourner entre des positions d'ouverture et de fermeture selon des pas égaux à 90°.

5. Dispositif selon l'une quelconque des revendications précédentes; comprenant une paire desdits éléments de fermeture rotatifs (24) montés sur des axes de rotation (26, 26a) sur ou au voisinage de parois latérales opposées (32) du conduit, et des moyens (56, 58) pour faire tourner les éléments conjointement dans des directions opposées pour ouvrir et fermer conjointement la sortie.

6. Dispositif selon l'une quelconque des revendications précédentes, dans lequel le conduit fournit un trajet dirigé vers le bas pour les articles libérés par l'ouverture de la porte de fermeture.

7. Dispositif selon l'une quelconque des revendications précédentes, comprenant des moyens d'aspiration (4, 16) dans un trajet pour articles aboutissant audit conduit, et des rouleaux (52) tournant en des sens opposés, qui étanchéifient au moins partiellement ledit trajet en amont de la porte de fermeture, au moins l'un des rouleaux possédant une périphérie pouvant fléchir de manière à permettre le passage d'articles entre les rouleaux par déformation de ladite périphérie ou desdites périphéries.
